# EUROPÄISCHE PATENTSCHRIFT

(11) **EP 0 828 992 B1**
(45) Veröffentlichungstag und Bekanntmachung des Hinweises auf die Patenterteilung: **01.08.2001**
(21) Anmeldenummer: 96917470.5
(22) Anmeldetag: 30.05.1996
(51) Int. Cl.: G01C 19/56, G01P 15/08, G01P 9/04

(54) **MIKROMECHANISCHER DREHRATENSENSOR**
MICROMECHANICAL RATE-OF-ROTATION SENSOR
CAPTEUR MICROMECANIQUE DE VITESSE DE ROTATION

(30) Priorität: 31.05.1995 DE 19520051
(43) Veröffentlichungstag der Anmeldung: 18.03.1998
(73) Patentinhaber: LITEF GmbH, 79115 Freiburg (DE)
(72) Erfinder: RYRKO, Bruno, F., D-79211 Denzlingen (DE); HANDRICH, Eberhard, D-79199 Kirchzarten (DE); BRENG, Uwe, D-79194 Gundelfingen (DE); HAFEN, Martin, F-68740 Rustenhart (DE)
(74) Vertreter: Müller, Frithjof E., Dipl.-Ing.
(86) Internationale Anmeldenummer: EP9602333
(87) Internationale Veröffentlichungsnummer: WO9638710

(56) Entgegenhaltungen:
- EP-A- 0 636 860
- WO-A-92/08140
- US-A- 5 285 686
- US-A- 5 396 798

## Beschreibung

Die Erfindung betrifft einen mikromechanischen Drehratensensor basierend auf dem Coriolis-Prinzip mit zwei elektrostatisch zu Schwingungen in Gegenphase anzuregenden plattenförmigen Schwingern.

Die Messung von Drehraten durch Bestimmung von Coriolis-Kräften ist bekannt und wird in einigen Sensoren dieser Gattung angewendet.

Bei den zur Zeit auf dem Markt erhältlichen Coriolis-Drehratensensoren werden zur Anregung beispielsweise von Schwingungen und zur Auslesung piezoelektrische Effekte ausgenutzt; vgl. nur beispielshalber EP 0 563 761 A1, EP 0 563 762 A1, EP 0 520 467 A1, EP 0 520 468 A2, EP 0 533 163 A2, EP 0 460 089 B1, GB 2 251 072 A, CA 1 313 065 A, EP 0 298 511 B1, EP 0 318 972 B1, EP 0 638 783 A1, US 5 247 252A und US 5 285 686 A.

Da die in der Mikrotechnologie für die genannten Zwecke benutzten piezoelektrischen Werkstoffe im Vergleich zum Silicium sehr unterschiedliche temperaturabhängige Werkstoffparameter besitzen, sind hohe Temperaturabhängigkeiten und Nichtwiederholbarkeiten des Nullpunkts solcher Drehratensensoren die Folge, die deren Anwendungsbereich stark einschränken.

Drehratensensoren mit mikromechanischen Elementen sind bereits erhältlich. Dagegen sind rein mikromechanische Lösungen für einen kompakten Sensor bis heute nicht auf dem Markt. Jedoch sind aus Patentveröffentlichungen mikromechanische Lösungen bekannt, bei denen Coriolis-Beschleunigungen gemessen werden; vgl. CH 682 844 A5, GB 2 251 688 A, DE 40 22 495 A1, EP 0 574 143 A1, EP 0 634 629 A1, US 5 203 208 A, EP 0 442 280 A2, US 4 750 364 A, EP 0 623 807 A, EP 0 620 415 A1, GB 2 276 241 A und US 4 884 446 A.

Für schwingende Strukturen in mikromechanischer Ausfertigung in Si-Technologie bieten sich kapazitive Aktoren zur Anregung bzw. kapazitive Brückenschaltungen zurAuslesung an; vgl. GB 92 00930, EP 0 586 437 A1 und GB 2 251 688 A.

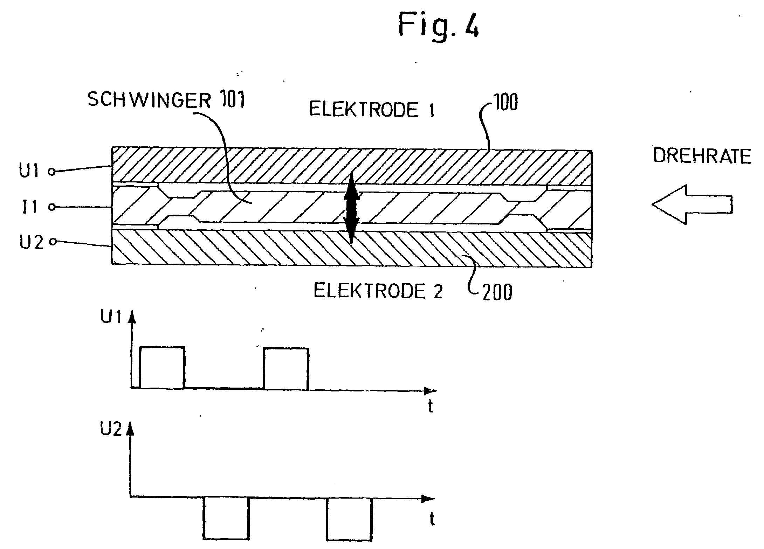

Für den kapazitiven Antrieb einer schwingenden mikromechanischen Struktur ist die wirksamste Kraftrichtung die senkrecht zwischen zwei gegenüberstehenden, entgegengesetzt gepolten Platten. Aus diesem Grund ist es zweckmäßig, für eine solche schwingende Struktur eine Anordnung zu wählen, bei der zwei entgegengesetzt gepolte Platte 100 bzw. 200 für den Antrieb des Schwingers 101 benutzt werden können (vgl. Fig. 4). Die schematischen Signaldiagramme unterhalb der Schnittdarstellung des Schwingers verdeutlichen die Pulse der Anregungssignale, mit denen die obere Platte 100 (Elektrode 1) bzw. die untere Platte 200 (Elektrode 2) beaufschlagt werden.

Verwendet man sehr kleine Abstände der beiden Antriebskondensatorflächen zwischen der oberen Platte 100 und dem Schwinger 101 einerseits bzw. zwischen der unteren Platte 200 und dem Schwinger 101 andererseits, so lassen sich mit vergleichsweise kleinen Spannungen (z. B. 5V) hinreichend große Antriebskräfte erreichen.

Nachteilig an dieser prinzipiell bekannten Anordnung nach Fig. 4 (vgl. etwa US 4 884 446) ist jedoch, daß die kleinen Abstände der Antriebskondensatorflächen zugleich die maximale Schwingeramplitude des Schwingers 101 auf einen Bruchteil eben dieser Kondensatorplattenabstände einschränken und für kleine Schwingerdämpfungen sehr hohe Anforderungen an die Gasatmosphäre gestellt werden müssen, innerhalb derer sich die Schwingeranordnung befindet.

Unter dem Einfluß der Coriolis-Beschleunigung wird eine zur Schwingerbewegung orthogonale Amplitude erzeugt, die zur Messung der Drehrate benutzt werden kann. Im Beispiel nach Fig. 4 erzeugt die eingezeichnete Drehrate Coriolis-Kräfte, die aus der Bildebene herauszeigen. Diese Anordnung hat jedoch den weiteren Nachteil, daß die Reaktionskräfte der Schwingerbewegung in die Umgebung des Sensors eingeleitet werden und Störungen der Meßwerte hervorrufen können.

Zur Vermeidung dieses letztgenannten Nachteils sind Doppelschwinger-Anordnungen vorgeschlagen worden, wie sie die Fig. 5 zeigt (vgl. auch GB 2 251 688 A). Der erste Schwinger 50 und der zweite Schwinger 60 bewegen sich gegenphasig. Eine Drehrate, deren Vektor senkrecht auf der Zeichenebene steht, erzeugt Drehmomente um diese gemeinsame Drehachse 55 in der Frequenz der Schwingerbewegungen. Mit dieser bekannten Anordnung lassen sich große Schwingeramplituden erreichen. Diese Anordnung hat jedoch den Nachteil, daß bei kapazitivem Antrieb über Differentialkondensatoren die Antriebskräfte zwischen Flächen wirken, die senkrecht zur Waferebene liegen und nur schwierig mit kleinen Abständen exakt parallel zueinander herzustellen sind. Ungleiche Luftspalte an den Schwingern 50, 60 wirken sich dann als Anregung um die Drehachse aus und beeinflussen den Nullpunkt des Sensors erheblich. Dieser Effekt ist temperaturabhängig. Ein weiterer Nachteil dieser Anordnung mit kapazitiver Anregung besteht in den relativ kleinen Antriebskräften, was man gemäß neueren Vorschlägen durch kammartige Elektroden zu verringern sucht.

Der Erfindung liegt die Aufgabe zugrunde, einen mikromechanischen Drehratensensor nach dem Coriolis-Prinzip zu schaffen, bei dem Störungen von Meßwerten durch Reaktionskräfte aufgrund von Schwingerbewegungen nicht auftreten und bei dem trotz erwünschter kleiner Abstände von Antriebskondensatorflächen prinzipiell keine oder wesentlich weniger Einschränkungen hinsichtlich einer zulässigen Schwingeramplitude zu berücksichtigen sind und der in mikromechanischer Technik kostengünstig herstellbar ist.

Die erfindungsgemäße Lösung besteht bei einem mikromechanischen Drehratensensor, der auf dem Coriolis-Prinzip basiert und zwei elektrostatisch zu Schwingungen in Gegenphase anzuregende plattenförmige Schwinger aufweist, darin, daß die Schwinger aus einkristallischen Wafern in mikromechanischer Technik hergestellt werden können und in zwei Ebenen schichtartig senkrecht zur Waferebene übereinander angeordnet sind und die Schwingungsrichtung senkrecht zur Plattenebene liegt. Damit kann eine kostengünstige Herstellung mit mikromechanischen Verfahren erfolgen, wie z. B. Ätzen und Waferbonden.

Die Schwinger sind erfindungsgemäß an einer Seite oder an zwei gegenüberliegenden Seiten jeweils mit einem Teil einer plattenartigen Trägerstruktur verbunden, über welche die elektrostatische Schwingungsanregung senkrecht zur Waferebene erfolgt, wobei die Eigenfrequenz der Trägerstruktur vorzugsweise höher gewählt ist als die der Schwinger. Weiterhin sind die Trägerstrukturteile so gestaltet, daß ihre Reaktionskräfte sich gegenseitig aufheben.

Um (noch) größere Schwingungsamplituden senkrecht zur Waferebene für die Schwinger zuzulassen, ist die Dicke der zwischen den beiden Teilen der Trägerstruktur verlaufenden Schwinger deutlich geringer als die der zur Schwingungsanregung dienenden Trägerstruktur. Die Dicke der Trägerstruktur andererseits ist so gewählt, daß sich möglichst kleine Antriebskondensatorspalte für die elektrostatische Schwingungsanregung im Bereich der Trägerstruktur ergeben.

Die Schwinger sind vorzugsweise über jeweils mindestens einen Anlenksteg geringer Dicke einstückig mit den Teilen der Trägerstruktur verbunden. Diese einstückige Schwinger-Träger-Kombination ist nun ihrerseits einseitig oder beidseitig durch jeweils einen Federsteg in einem die Anordnung aus Schwinger und Trägerstruktur umgebenden Rahmen gehalten, wobei der Federsteg vorzugsweise als Blattfederelement oder als schrägstehendes Federelement gestaltet ist, das im wesentlichen nur lineare Auslenkbewegungen des Schwingers zuläßt und Drehbewegungen des Schwingers unterdrückt.

Eine vorteilhafte Realisierung eines solchen mikromechanischen Drehratensensors besteht darin, die Schwinger samt den über die Anlenkstege damit einstückig verbundenen Teilen der Trägerstruktur und des Rahmens aus zwei Lagen eines Wafers vorzugsweise durch anisotropes Ätzen zu bilden, die zur gegenseitigen Isolation auf der jeweils einander zugekehrten Fläche oxidiert und die durch Silicium-Fusionsbonding miteinander zu einer Doppelschwingerstruktur verbunden sind. Die fluchtend übereinander angeordneten Doppelschwingerstrukturen sind dann ober- und unterseitig durch nicht-leitende Deckplatten, die mit den Rahmen verbondet sind, hermetisch abgedichtet. Die Schwingerstrukturen befinden sich dann in dem so gebildeten Gehäuse im Vakuum oder in einer Inertgasatmosphäre unter geringem Druck.

Die Erfindung und weitere vorteilhafte Einzelheiten werden nachfolgend unter Bezug auf die Zeichnungen in einer beispielsweisen Ausführungsform näher erläutert. Es zeigen:
- Fig. 1: die Schnittdarstellung einer Doppelschwingerstruktur eines Drehratensensors nach dem Coriolis-Prinzip mit erfindungsgemäßen Merkmalen;
- Fig. 2: in auseinandergezogener Darstellung den Schichtaufbau der Doppelschwingerstruktur nach Fig. 1, hergestellt aus insgesamt vier Waferebenen mit Ergänzung durch eine ober- und eine unterseitige Deckplatte;
- Fig. 3: die Prinzip-Schnittdarstellung einer Deckplatte zur Verdeutlichung der Durchkontaktierung von auf deren Innenflächen aufgebrachten Elektroden;
- Fig. 4: eine bereits erläuterte bekannte Plattenschwingerstruktur;
- Fig. 5: eine ebenfalls bereits erläuterte bekannte Doppelschwingerstruktur mit in einer Ebene nebeneinander angeordneten Schwingern;
- Fig. 6: die perspektivische Teilansicht einer Doppelschwingerstruktur mit erfindungsgemäßen Merkmalen, die einseitig angelenkt ist;
- Fig. 7: eine der Fig. 6 entsprechende Doppelschwingerstruktur einschließlich einer umgebenden Rahmenanordnung, jedoch ohne obere und untere Deckplatten;
- Fig. 8: eine der Fig. 6 entsprechende Doppelschwingerstruktur mit einseitiger Anlenkung über in einer [111]-Ebene liegenden Anlenkstegen, die insgesamt eine Art Kreuzfedergelenk bilden; und
- Fig. 9: die Doppelschwingerstruktur der Fig. 8 innerhalb einer umgebenden Rahmenanordnung wiederum ohne obere und untere Deckplatten.

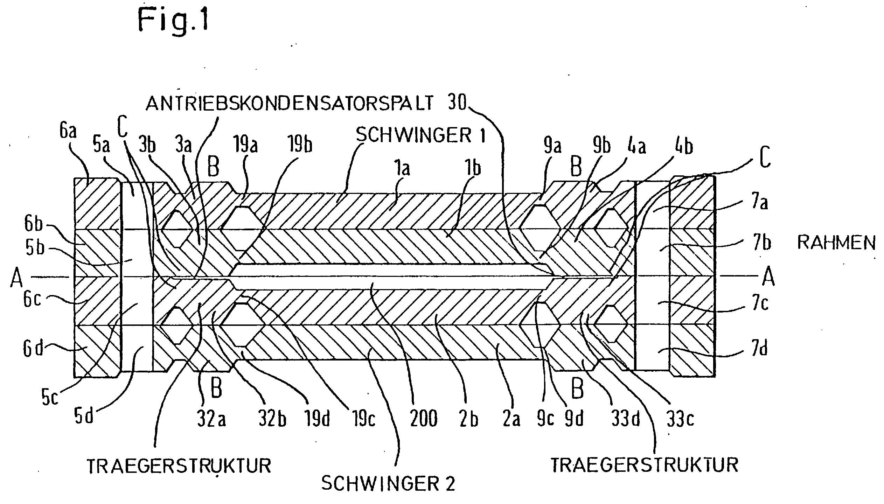

Die Fig. 1 zeigt zunächst in Schnittdarstellung den prinzipiellen Aufbau und die Anordnung einer zweilagigen Schwingerstruktur für einen mikromechanischen Drehratensensor mit Ausnutzung von Coriolis-Kräften zur Gewinnung eines Drehratensignals.

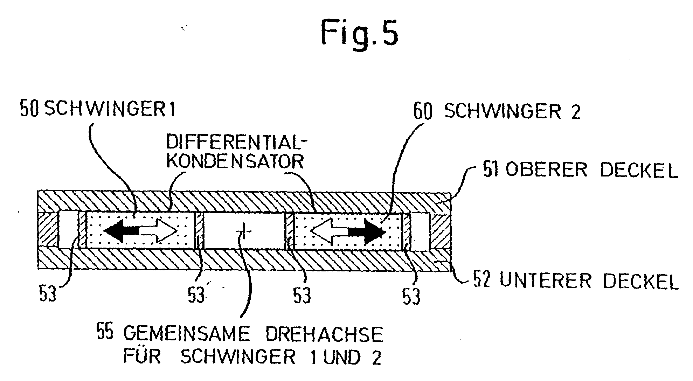

Im Gegensatz zu dem bekannten Aufbau nach Fig. 5 (vgl. auch GB 2 251 688 A) mit zwei nebeneinanderliegenden, entgegengesetzt schwingenden Massen liegen bei dem Ausführungsbeispiel gemäß der Erfindung nach Fig. 1 die entgegengesetzt schwingenden Strukturen nicht in einer Ebene nebeneinander, sondern in verschiedenen Ebenen übereinander, und zwar so, daß die Reaktionskräfte der Schwingerdynamik sich gegenseitig vollständig aufheben.

Im dargestellten Beispiel weist die Schwingeranordnung zwei jeweils doppellagige Schwingerelemente 1a, 1b bzw. 2a, 2b auf, die jeweils zu beiden Seiten über Anlenkstege 9a, 19a bzw. 9b, 19b und - bezogen auf den unteren Schwinger 2a, 2b über Anlenkstege 9c, 19c bzw. 9d, 19d einstückig mit plattenartigen Trägerteilen 4a, 3a bzw. 4b, 3b einerseits und 33c, 33d bzw. 32a, 32b andererseits verbunden sind. Die Trägerteile 3a, 3b und 4a, 4b bzw. 32b, 32a und 33c, 33d sind ihrerseits über Federstege 5, d. h. 5a, 5b, 5c und 5d, bzw. 7, d. h. 7a, 7b, 7c und 7d, mit einem umlaufenden Rahmen 6, d. h. 6a, 6b, 6c, 6d ebenfalls einstückig verbunden. Die einzelnen Lagen oder Schichten bestehen also, beispielsweise bezogen auf die in Fig. 1 oberste Lage, einstückig aus dem Rahmen 6a, verbunden über den Federsteg 5a mit dem Trägerteil 3a, das über den Anlegsteg 19a mit dem Schwingerelement la verbunden ist, das rechtsseitig über den Anlenksteg 9a in das rechtsseitige Trägerteil 4a übergeht, das wiederum über den Federsteg 7a mit dem rechtsseitigen Teil des Rahmens 6a verbunden ist. Eine derartige Schwingerstruktur ist aus einem Wafermaterial hergestellt, beispielsweise durch einen anisotropen Ätzprozeß. Zwischen den einzelnen Lagen der zweilagigen Doppelschwingerstruktur sind die Waferplatten oxidiert, also gegeneinander elektrisch isoliert, und sodann durch Si-Fusionsbonding miteinander verbunden.

Wie die Fig. 1 gut erkennen läßt, ist der Abstand zwischen dem oberen Schwinger 1a, 1b und dem unteren Schwinger 2a, 2b vergleichsweise groß, so daß auch große Schwingungsamplituden möglich sind. Andererseits ist ein Antriebskondensatorspalt 30 zwischen den linksseitigen Trägerteilen 3a, 3b bzw. 32b, 32a einerseits und den rechtsseitigen Trägerteilen 4a, 4b bzw. 33c, 33d erwünschterweise relativ klein, so daß eine gute Schwingungsanregung mit vergleichsweise niedrigen Pegeln einer Pulsspannung möglich ist. Wie oben erwähnt, wird die Eigenfrequenz der im Vergleich zu den Schwingerelementen dickeren Trägerstrukturteile 3a, 3b und 4a, 4b bzw. 32b, 32a und 33c, 33d anders, insbesondere höher, gewählt als die Eigenfrequenz der beiden Schwinger 1a, 1b und 2a, 2b.

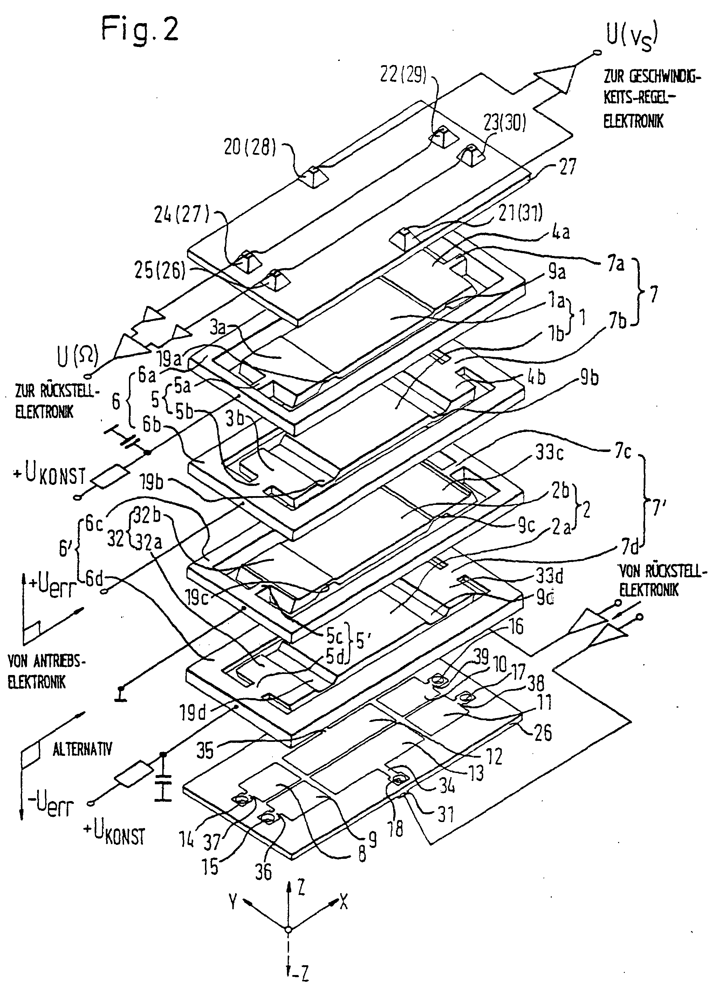

Die zur Aufhängung bzw. Halterung der beiden Doppelschwingerstrukturen im Rahmen 6 mit den Rahmenteilen 6a bis 6d dienenden Federstege 5a bis 5d bzw. 7a bis 7d sind - wie die Fig. 2 besser erkennen läßt - als Blattfederelemente gestaltet, die für Drehbewegungen um die y-Achse (A-A) nachgiebig sind und lineare Bewegungen in der +z- bzw. -z-Richtung weitgehend unterdrücken.

Ersichtlicherweise wird im Gegensatz zur bekannten Doppelschwingeranordnung nach Fig. 5 der Doppelschwinger nach Fig. 1 bzw. Fig. 2 nicht direkt, sondern über die Trägerstruktur 3a, 3b und 4a, 4b bzw. 32b, 32a und 33c, 33d angeregt. Diese Trägerstruktur hat eine größere Steifigkeit als die Schwinger 1a, 1b bzw. 2a, 2b und verursacht nur kleine Bewegungen bei der Resonanzfrequenz der Schwinger, teilt jedoch den Schwingern, die, wie dargelegt, einengroßenAbstand bzw. Freiraum 200 zum Aufbau einer größeren Schwingeramplitude haben, diese Anregung mit. Da die Schwinger 1a, 1b bzw. 2a, 2b nicht direkt angetrieben werden, kann dieser Freiraum 200 im Prinzip beliebig groß gestaltet werden, womit sich eine gute Stabilität bei hoher Gütezahl für die Schwinger erreichen läßt. Andererseits kann der Kondensatorspalt 30 für die Anregung im Sub-Mikrometerbereich gewählt werden, wodurch sich auch bei kleinen Spannungen ausreichend große Antriebskräfte erzielen lassen. Die Schwingeramplitude summiert sich bei ausreichend geringer Dämpfung und geeigneter Anregungsphase über die Antriebsamplituden zu Schwingeramplituden, die um Größenordnungen höher liegen können. Der größere Abstand der Schwinger 1 und 2 voneinander und von den umgebenden Bauteilen ermöglicht die oben erwähnte hohe Schwingergüte.

Eine Besonderheit der dargestellten Konstruktion ist auch darin zu sehen, daß die Antriebskräfte sich nicht auf einer Basisstruktur abstützen, von der sie auf die sich entgegengesetzt bewegenden Hälften der Trägerstruktur 3, 4 bzw. 32, 33 übertragen werden müssen. Die Antriebskräfte werden vielmehr ausschließlich direkt zwischen den beiden jeweiligen Hälften der Trägerstruktur wirksam.

Da sich beide doppellagigen Schwinger 1, 2 entgegengesetzt bewegen, werden bei dieser Anordnung keine Reaktionskräfte nach außen abgegeben. Umgekehrt werden transversale Störungen von außen infolge der entgegengesetzten Schwingerbewegungen auf beide Schwinger mit entgegengesetztem Sinn wirksam, so daß sich ihre Einflüsse im Ausgangssignal gegenseitig aufheben.

Bei Drehbewegungen des gesamten Sensors um die Achse A-A werden die beiden Schwinger 1,2 aus ihrer Schwingungsebene entgegengesetzt herausbewegt. Als Folge entsteht ein zur Schwingerbewegung synchrones Drehmoment um die Achse A-A, welches die Trägerstruktur mitnimmt. Da die Trägerstruktur 3, 4 zusammen mit den Schwingern 1, 2 in einem Rahmen befestigt ist, lassen sich Drehbewegungen im Bereich B der Trägerstruktur kapazitiv auslesen. Dabei kann die linke Hälfte der Trägerstruktur 3a, 3b bzw. 32a, 32b einerseits und die rechte Hälfte der Trägerstruktur 4a, 4b bzw. 33c, 33d andererseits getrennt ausgelesen werden. Auf diese Art können also entweder Einwirkungen von Drehungen um die zur Bildmitte orthogonale Achse im Signal kompensiert und/oder in einem zweiten Kanal gemessen werden.

Im dargestellten Beispiel sind die Schwinger und die Trägerstruktur zur Erhöhung der Drehsteifigkeit um die zur Zeichenebene orthogonale Achse durch die erwähnten parallelen als Blattfedern gestalteten Federstege 5, 7 bzw. 5', 7' gehalten. Diese Blattfederelemente lassen Drehbewegungen der Schwinger um die y-Achse zu. Werden die Teile 1a bzw. 1b und 2a bzw. 2b der beiden Doppelschwingerstrukturen wie oben erwähnt durch Oxidschichten gegeneinander isoliert, so sind die Potentiale für die Anregung und für die Auslesung galvanisch getrennt, so daß sich erhebliche Vorteile für die Geschwindigkeitsregelung sowie für die Ankopplung und Auslegung der Rückstellelektronik und der Antriebselektronik ergeben.

Da die Trägerstruktur in den Bereichen B (vgl. Fig. 1) nur sehr kleine Bewegungen ausführt, ergibt sich der weitere Vorteil, daß mittels der kleinen Antriebskondensatorspalte 30 eine große Empfindlichkeit für die Auslesung von Drehbewegungen erzielt werden kann.

Die zur Auslesung der Schwingerbewegungen, also der Erregerschwingungen, und die zur Auslesung der Drehbewegungen im Bereich der Trägerstruktur (drehrateninduziert) benötigten Elektroden lassen sich auf der jeweiligen Innenseite von die Schwingerstruktur abschließenden Grund- und Deckplatten 26 bzw. 27 als Metallbelag aufbringen.

Um die notwendige geringe Dämpfung der beiden Schwinger zu erzielen, muß ein über die Lebensdauer des Sensors stabiler Unterdruck in der Schwingerumgebung aufrechterhalten werden. Die notwendige Dichtigkeit des Gehäuses kann durch die anodisch gebondeten Grund- bzw. Deckplatten 26 und 27 aus einem nichtleitenden Material, z. B. aus Glas, erreicht werden. Die Elektrodenanschlüsse werden über Durchbrüche in der Grund- bzw. Deckplatte durchkontaktiert und durch ebenfalls gebondete Si-Inseln gasdicht abgeschlossen, was nun nachfolgend mit Bezug auf die Fig. 2 näher ausgeführt wird.

Diese Fig. 2 zeigt die auseinandergezogene Explosionsdarstellung eines vollständigen mikromechanischen Drehratensensors erfindungagemäßer Bauart. Die vier mittleren schichtartigen Schwingerstrukturen wurden bereits anhand der Fig. 1 erläutert. Der obere Schwinger 1 besteht aus den beiden Teilen 1a und 1b, die an den gegenseitigen Berührungsflächen zur Isolation oxidiert und durch Si-Fusionsbonding (SFB) fest verbunden sind. Der Schwinger 2 mit seinen Teilen 2a und 2b ist analog aufgebaut. Die Schwinger 1 und 2 werden in Gegenphase zu Schwingungen angeregt.

Zur Einstellung einer gewünschten Nachgiebigkeit kann die Stärke der Anlenkstege 9a, 9b bzw. 19a, 19b und 9c, 9d bzw. 19c, 19d, die eine grabenähnliche Vertiefung bilden, entsprechend gewählt werden.

Die Auslesung der transversalen Schwingerbewegungen in Richtung +z bzw. -z erfolgt durch als Metallbeläge ausgebildete Kondensatorflächen 12 und 13, die innenseitig auf die beiden bondfähigen Isolierplatten, also die Deckplatte 27 und die Grundplatte 26, aufgebracht sind und über Durchbrüche in diesen Isolierschichten mit gebondeten Siliciuminseln 20, 21 bzw. 28, 31 verbunden sind. Die Durchverbindung kann genau wie die Elektroden selbst im gleichen Arbeitsgang durch den Auftrag einer leitenden Schicht hergestellt sein. Die Fig. 2 läßt außerdem in schematischer Blockschaltbilddarstellung die Verbindung der genannten Anschlüsse zu einer Geschwindigkeits-Regelelektronik bzw. von einer Rückstellelektronik erkennen.

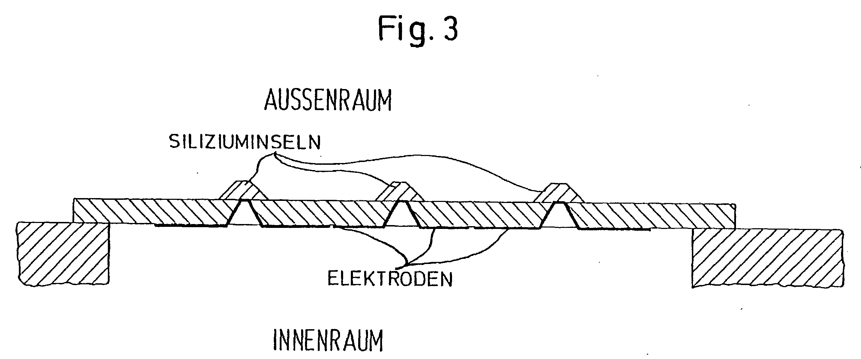

In gleicher Art und Weise sind - im dargestellten Beispiel der Fig. 2 nur für die Grundplatte 26 gezeigt - flächenartige Elektroden 8, 9 bzw. 10, 11 zur Auslesung der durch Drehraten induzierten, rotatorischen Bewegungen, die von den Schwingern 1 und 2 auf die Trägerstrukturteile 3a, 3b bzw. 32a, 32b und 4a, 4b bzw. 33c, 33d übertragen werden, ausgebildet. Jede einzelne dieser Elektroden ist über eine metallische Leiterbahn 34, 35, 36, 37, 38 und 39 mit einer kegeligen oder konischen Durchführung 14, 15, 16, 17, 18 verbunden, die ebenfalls metallisiert ist. Die Fig. 3 zeigt für diese Art der Durchkontaktierung ein Ausführungsbeispiel. Nach außen sind die konischen Durchbrüche durch je eine anodisch aufgebondete, leitende Siliciuminsel abgeschlossen, die den Sensor nach oben und unten hin hermetisch abschließen. Diese leitenden Siliciuminseln bilden gleichzeitig oder sind versehen mit Kontaktplättchen 20, 21, 22, 23, 24 und 25. Die Grundplatte 26 und die Deckplatte 27 sind anodisch auf die Rahmen 6, 6' gebondet. Es können identische Deckplatten benutzt werden. Über die Siliciuminseln bzw. die Kontaktplättchen 20 bis 25 können die genannten Elektrodenschichten elektrisch kontaktiert werden.

Die Fig. 2 läßt in schematischer Ausführung auch erkennen, wie die beiden Doppelschwinger elektrisch anzuschließen bzw. zu erregen sind. Beispielsweise kann der obere Teilschwinger 1a über den Rahmen an ein Konstantpotential +Uₖₒₙₛₜ angeschlossen sein. Der nach Masse führende Kondensator deutet die wechselspannungsmäßige Abschirmung an. Der zweite Teilschwinger 1b wird dann mit Erregerpulsen +Uₑᵣᵣ von einer Antriebselektronik beaufschlagt. Der obere Teil 2b des zweiten Doppelschwingers kann, wie dargestellt, auf Festpotential, beispielsweise Masse, liegen oder aber durch entsprechende negative Pulse-Uₑᵣᵣ von der Antriebselektronik aus beaufschlagt werden.

Im dargestellten Ausführungsbeispiel wurde die Ausleselektrode für die Schwingerbewegung in die Elektroden 8 und 9 (bzw. 10 und 11) geteilt, wodurch die Möglichkeit besteht, die kapazitive Auslesung symmetrisch auszulegen und Einstreuungen weitgehend zu unterdrücken.

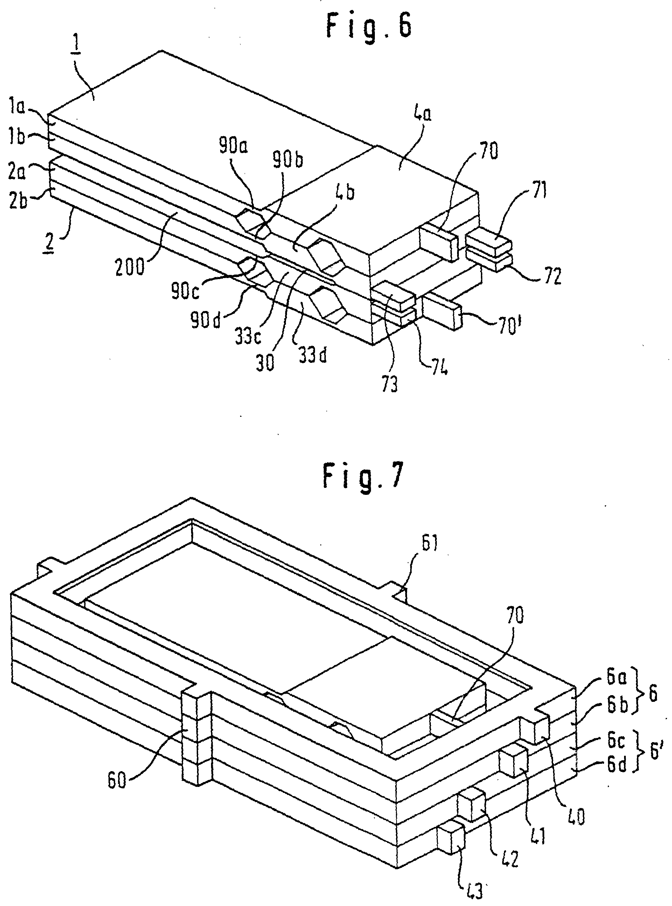

Die Fig. 6 verdeutlicht ein erstes Ausführungsbeispiel für eine Doppelschwingerstruktur, die im Prinzip genauso aufgebaut ist wie die oben anhand der Fig. 1 erläuterte, jedoch mit dem Unterschied, daß die ebenfalls jeweils zweilagigen Schwinger 1 und 2 nur über einen einzigen schmalen Kondensator-Antriebsspalt 30 erregt werden, pro Schwingerelement 1a, 1b bzw. 2a, 2b jeweils nur ein Anlenksteg 90a bis 90d und jeweils nur ein Trägerteil 4a, 4b bzw. 33c, 33d vorgesehen ist. Weiterhin ist pro Schwingerelement 1 bzw. 2 jeweils ein auf der Stirnseite mittig angeordneter Federsteg 70 bzw. 70' vorgesehen, über den auch der jeweilige elektrische Anschluß erfolgen kann. In den Zwischenebenen, also bezogen auf die inneren Schwingerelemente 1b bzw. 2a, sind gegenüber den mittig angeordneten Federelementen 70, 70' versetzt angeordnete Federstege 71 bis 74 vorhanden. Durch diese versetzte Anordnung der Federstege 70, 70' bzw. 71 bis 74 wird eine erhebliche Erhöhung der Steifigkeit in der jeweiligen Ebene (Waferebene) der Schwingerelemente 1a, 1b bzw. 2a, 2b erreicht.

Die Fig. 7 verdeutlicht die gegenüber den erstbeschriebenen Ausführungsformen abgewandelte Gestaltung der Rahmenstruktur 6, 6'. Auf der Mitte der Längsseite sind zueinander fluchtende Montageansätze 60 angeformt, während auf einer oder beiden Schmalseiten der Rahmen zueinander versetzt angeordnete Seitenkontakte 40, 41, 42 und 43 ausgebildet sind.

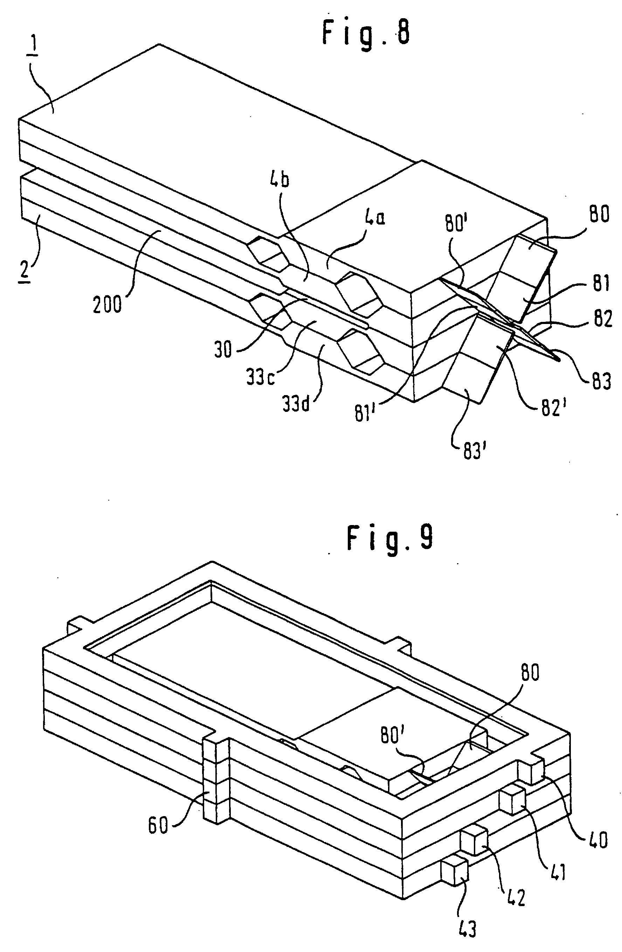

Die Ausführungsform nach Fig. 8 einer doppellagigen Schwingerstruktur unterscheidet sich gegenüber der nach Fig. 6 durch die andersartige Ausbildung von einseitigen schräg und zueinander fluchtenden sowie sich überkreuzenden Federstegen 80 bis 83 bzw. 80' bis 83'. Während die eigentliche plattenartige. einseitig angelenkte Schwingerstruktur vom freien (linksseitigen) Ende bis zur vorderen, anlenkseitigen Stirnfläche aus einzelnen [100] Si-Wafern besteht, sind die Federstege 80 bis 83 bzw. 80' bis 83' durch anisotropes Ätzen in Vorzugsrichtung, d. h. aus [111]-Ebenen, geformt, und zwar, wie die Fig. 8 gut erkennen läßt, nach Art eines einzigen Kreuzfedergelenks. Wie für den Fachmann ersichtlich ist, bietet die Ausführungsform einer Schwingerstruktur nach Fig. 8 einige herstellungstechnische Vorteile bei gleichzeitiger Verbesserung der Steifigkeit in den Waferebenen.

Schließlich zeigt die Fig. 9 den fertiggestellten Schichtaufbau eines erfindungsgemäßen mikromechanischen Drehratensensors mit einer Schwingerstruktur gemäß Fig. 8, jedoch noch ohne die Deckplatten 26 bzw. 27. Die Rahmenstruktur entspricht derjenigen der Fig. 7.

Mit der Erfindung wurde ein vollständig in mikromechanischer Technik herstellbarer Drehratensensor basierend auf dem Coriolis-Prinzip geschaffen, bei dem zwei Schwinger über Trägerstrukturen angeregt werden, die so gestaltet sind, daß eine konstruktive Symmetrie Anregungen von Strukturresonanzen durch äußere Vibrationen vollständig vermeidet. Diese Trägerstruktur übernimmt von den Schwingern die durch Drehraten induzierten Drehmomente, wobei die Auslesung über einen sehr engen Luftspalt erfolgt, der weit kleiner ist als die transversalen Schwingeramplituden.

Gegenüber bisher bekannt gewordenen mikromechanischen Drehratensensoren, die auf dem Coriolis-Prinzip basieren, erfolgt gemäß der Erfindung die Anregung der Schwinger 1, 2 senkrecht zur jeweiligen Waferebene. Die erwähnten Nachteile einer kapazitiven horizontalen Anregung werden dadurch vermieden, und aufgrund eines sehr engen Antriebsspalts lassen sich vergleichsweise große Kräfte bei relativ kleinen Anregungsspannungen erzielen. Weiterhin werden im Gegensatz zu bekannten Drehratensensoren der hier beschriebenen Art nicht die durch Coriolis-Beschleunigungen verursachten Bewegungen der einzelnen Schwinger ausgelesen, die den viel größeren Anregungsschwingungen überlagert sind. Vielmehr werden die Auswirkungen der Coriolis-Beschleunigungen beider Schwinger 1, 2 auf die gemeinsame Trägerstruktur kapazitiv detektiert. Auf der Trägerstruktur heben sich dadurch die Reaktionskräfte der einzelnen Teilschwinger zumindest weitgehend vollständig auf. Dem zunächst sich ergebenden Widerspruch, daß für die kapazitive Anregung und Auslesung möglichst kleine Spalte benötigt werden, andererseits aber für die Bewegung der Teilschwinger möglichst große Spalte, wird erfindungsgemäß mit der Idee begegnet, daß die einzelnen Teilschwinger auf einer gemeinsamen Anregungsstruktur sitzen. Diese gemeinsame Anregungsstruktur ermöglicht kleine Anregungsspalte 30, während für die Schwinger 1, 2 ein großer Bewegungsspalt 200 gegeben ist.

## Patentansprüche

1. Mikromechanischer Drehratensensor basierend auf dem Coriolis-Prinzip mit zwei elektrostatisch zu Schwingungen in Gegenphase anzuregenden plattenförmigen Schwingern (1, 2), **dadurch gekennzeichnet,** daß die beiden Schwinger (1, 2) in zwei Ebenen schichtartig übereinander angeordnet sind und senkrecht zu ihren Plattenebenen zu Schwingungen anregbar sind.

2. Drehratensensor nach Anspruch 1, **dadurch gekennzeichnet,** daß die Schwinger (1, 2) an zwei gegenüberliegenden Seiten jeweils mit einem Teil (3a, 3b bzw. 4a, 4b; 32a, 32b bzw. 33c, 33d) einer plattenartigen, übereinander angeordneten Trägerstruktur verbunden sind, über welche die elektrostatische Schwingungsanregung erfolgt.

3. Drehratensensor nach Anspruch 1, **dadurch gekennzeichnet,** daß die Schwinger (1, 2) an einer Seite jeweils mit einem Teil (4a, 4b, 33c, 33d) einer plattenartigen, übereinander angeordneten Trägerstruktur verbunden sind, über welche die elektrostatische Schwingungsanregung erfolgt

4. Drehratensensor nach Anspruch 2 oder 3, **dadurch gekennzeichnet,** daß die Eigenfrequenz der Trägerstruktur anders, vorzugsweise höher, gewählt ist als die der Schwinger (1, 2), und daß die Trägerstrukturteile jedes Schwingers so gestaltet sind, daß ihre Reaktionskräfte sich gegenseitig aufheben.

5. Drehratensensor nach Anspruch 2 oder 3, **dadurch gekennzeichnet,** daß die Dicke der sich von der Trägerstruktur aus erstreckenden Schwinger geringer ist als die der Trägerstruktur, derart, daß die mögliche Schwingungsamplitude der Schwinger (1, 2) wesentlich größer ist als die durch den Antriebskondensatorspalt (30) für die elektrostatische Schwingungsanregung im Bereich der Trägerstruktur mögliche Erregeramplitude.

6. Drehratensensor nach einem der vorstehenden Ansprüche, **dadurch gekennzeichnet,** daß die Schwinger über jeweils mindestens einen Schwingfeder-Anlenksteg (9a, 9b bzw. 19a, 19b und 9c, 9d bzw. 19c, 19d; 90a bis 90d) geringer Dicke einstückig mit der Trägerstruktur verbunden sind.

7. Drehratensensor nach Anspruch 6, **dadurch gekennzeichnet,** daß die Trägerstruktur einseitig oder zweiseitig, d. h. jeweils auf der dem Schwinger abgekehrten Außenseite über einen Federsteg (70, 70'; 5, 7 bzw. 5', 7') in einem die Anordnung aus Schwinger und Trägerstruktur umgebenden Rahmen (6, 6') gehalten ist.

8. Drehratensensor nach Anspruch 7, **dadurch gekennzeichnet,** daß die einzelnen Federstege (70, 70'; 5, 7 bzw. 5', 7') als Blattfederelemente gestaltet sind, die rotatorische Auslenkbewegungen der Schwinger (1, 2) gewährleisten und lineare Bewegungen der Schwinger (1, 2) senkrecht zu der Plattenebenen weitgehend unterdrücken.

9. Drehratensensor nach einem der vorstehenden Ansprüche, **dadurch gekennzeichnet**, daß die Schwinger (1, 2) samt den damit einstückig verbundenen Teilen der Trägerstruktur, der Federstege und des Rahmens aus zwei Lagen von Wafern durch anisotropes Ätzen gebildet sind, die zur Isolation auf den jeweils miteinander verbundenen Flächen oxidiert und durch Waferbonden zu einer Doppelschwingerstruktur miteinander verbunden sind.

10. Drehratensensor nach Anspruch 9, **dadurch gekennzeichnet,** daß die Wafer [100]-Si-Wafer sind.

11. Drehratensensor nach Anspruch 9, **dadurch gekennzeichnet,** daß die fluchtend übereinander angeordneten Doppelschwingerstrukturen ober- und unterseitig durch Deckplatten (26, 27), die mit den Rahmen (6, 6') verbondet sind, hermetisch abgedichtet innerhalb des so gebildeten evakuierten oder mit Inertgas unter geringem Druck gefluteten Gehäuses angeordnet sind.

12. Drehratensensor nach Anspruch 11, **dadurch gekennzeichnet,** daß die Deckplatten (26, 27) aus Glas bestehen, die durch anodisches Bonden entlang der Rahmen (6, 6') hermetisch abgedichtet verbunden sind.

13. Drehratensensor nach Anspruch 11 oder 12, **dadurch gekennzeichnet,** daß die Deckplatten (26, 27) innenseitig mit flächigen Metallfeldern (8 bis 13) beschichtet sind, die einerseits den beiden Schwingern (1, 2) als Schwingungs-Auslese- bzw. -Rückstell-Kondensatorflächen und andererseits den beabstandeten Trägerstrukturteilen als Anregungselektroden bzw. zur Auslesung von durch Drehraten induzierten Bewegungen zugeordnet sind.

14. Drehratensensor nach Anspruch 13, **dadurch gekennzeichnet,** daß die Metallfelder (8 bis 13) über durchkontaktierte Löcher in den Deckplatten (26, 27) elektrisch kontaktierbar sind, die außenseitig durch aufgebondete leitende Verschlußinseln (20 bis 31) verschlossen sind.

15. Drehratensensor nach Anspruch 14, **dadurch gekennzeichnet,** daß die leitenden Verschlußinseln durch hochdotiertes Si-Material gebildet sind, die mit den Deckplatten durch anodisches Bonden bzw. Si-Fusionsbonden hermetisch abdichtend verbunden sind.

16. Drehratensensor nach einem der vorstehenden Ansprüche, **dadurch gekennzeichnet,** daß die Rahmen (6a bis 6d) mindestens auf einer Auß enseite der Schichtanordnung mit von Waferschicht zu Waferschicht versetzten Ansätzen (40 bis 43) für elektrischen Anschluß versehen sind.

17. Drehratensensor nach einem der vorstehenden Ansprüche, **dadurch gekennzeichnet,** daß die Rahmen (6a bis 6d) an zwei gegenüberliegenden Seiten mit fluchtend übereinander angeordneten Montageansätzen (60. 61) versehen sind.

18. Drehratensensor nach Anspruch 7, **dadurch gekennzeichnet,** daß die Trägerstruktur bei einseitiger Halterung außer über jeweils einen jedern Schwinger zugeordneten Federsteg (70, 70') mit weiteren, versetzt angeordneten Halte- und Anschlußstegen (71 bis 74) zur Verbindung mit dem jeweiligen Rahmen (6a bis 6d) versehen ist.

19. Drehratensensor nach Anspruch 10, **dadurch gekennzeichnet**, daß die Federstege als unter einem Winkel zu den möglichen Auslenkrichtungen angeordnete Blattfederstege durch anisotropes Ätzen in [111]-Ebenen der jeweiligen Waferschicht gebildet sind.

20. Drehratensensor nach Anspruch 19, **dadurch gekennzeichnet,** daß jede Waferschicht mit zwei Blattfederstegen mit zu einer gedachten Mittellinie entgegengesetzt gleicher Winkelstellung derart versehen ist, daß sich von Schicht zu Schicht eine zueinander fluchtende und sich kreuzende Steganordnung ergibt, die insgesamt ein Kreuzfedergelenk bildet.

## Claims

1. Micromechanical rate-of-rotation sensor based on the coriolis principle and having two plate-like oscillators (1, 2) to be stimulated electrostatically to oscillate in antiphase, characterized in that the two oscillators (1, 2) are arranged one above another in two planes, like layers, and can be stimulated to oscillate perpendicular to their plate planes.

2. Rate-of-rotation sensor according to Claim 1, characterized in that the oscillators (1, 2) are connected on two opposite sides in each case to apart (3a, 3b and 4a, 4b; 32a, 32b and 33c, 33d, respectively) of a plate-like support structure arranged one above another, via which the electrostatic stimulation of oscillation is performed.

3. Rate-of-rotation sensor according to Claim 1, characterized in that the oscillators (1, 2) are connected on one side in each case to a part (4a, 4b, 33c, 33d) of a plate-like support structure arranged one above another, via which the electrostatic stimulation of oscillation is performed.

4. Rate-of-rotation sensor according to Claim 2 or 3, characterized in that the inherent frequency of the support structure is selected to be different from, preferably higher than, that of the oscillators (1, 2), and in that the support structure parts of each oscillator are configured such that their reaction forces mutually cancel each other.

5. Rate-of-rotation sensor according to Claim 2 or 3, characterized in that the thickness of the oscillator extending out from the support structure is lower than that of the support structure, in such a way that the possible amplitude of oscillation of the oscillators (1, 2) is significantly larger than the possible exciter amplitude, through the drive capacitor gap (30), for the electrostatic stimulation of oscillation in the region of the support structure.

6. Rate-of-rotation sensor according to one of the preceding claims, characterized in that the oscillators are connected in one piece to the support structure, via in each case at least one oscillation spring articulation strut (9a, 9b or 19a, 19b and 9c, 9d or 19c, 19d; 90a to 90d) of low thickness.

7. Rate-of-rotation sensor according to Claim 6, characterized in that the support structure is held on one side or two sides, that is to say in each case on the outer side facing away from the oscillator, via a spring strut (70, 70'; 5, 7 or 5', 7'), in a frame (6, 6') surrounding the arrangement of oscillator and support structure.

8. Rate-of-rotation sensor according to Claim 7, characterized in that the individual spring struts (70, 70'; 5, 7 or 5', 7') are configured as leaf spring elements, which ensure rotational deflection movements of the oscillators (1, 2) and largely suppress linear movements of the oscillators (1, 2) in vertical direction of said plate planes.

9. Rate-of-rotation sensor according to one of the preceding claims, characterized in that the oscillators (1, 2), together with the parts connected in one piece thereto of the support structure, the spring struts and the frame, are formed by means of anisotropic etching from two layers of wafers which, for the purpose of insulation, are oxidized on the respectively mutually connected surfaces and are connected to one another by wafer bonding to form a double oscillator structure.

10. Rate-of-rotation sensor according to Claim 9, characterized in that the wafers are [100] Si wafers.

11. Rate-of-rotation sensor according to Claim 9, characterized in that the double oscillator structures, which are arranged one above another in alignment, are arranged, sealed off hermetically at the upper and lower side by cover plates (26, 27) that are bonded to the frames (6, 6'), inside the housing which is thus formed and which is evacuated or flooded with inert gas under low pressure.

12. Rate-of-rotation sensor according to Claim 11, characterized in that the cover plates (26, 27) consist of glass and are connected in a hermetically sealed manner by anodic bonding along the frames (6, 6').

13. Rate-of-rotation sensor according to Claim 11 or 12, characterized in that the cover plates (26, 27) are coated on the inside with flat metal fields (8 to 13) which, on the one hand, are assigned to the two oscillators (1, 2) as oscillation reading out or resetting capacitor surfaces and, on the other hand, are assigned to the spaced-apart support structure parts as stimulation electrodes or for reading out movements induced by rates of rotation.

14. Rate-of-rotation sensor according to Claim 13, characterized in that the metal fields (8 to 13) can be contacted electrically via through-plated holes in the cover plates (26, 27), which holes are closed on the outside by bonded on, conductive closure islands (20 to 31).

15. Rate-of-rotation sensor according to Claim 14, characterized in that the conductive closure islands are formed by highly doped Si material and are connected in a hermetically sealed manner to the cover plates by means of anodic bonding or Si fusion bonding.

16. Rate-of-rotation sensor according to one of the preceding claims, characterized in that the frames (6a to 6d) are provided, at least on one outer side of the layer arrangement, with attachments (40 to 43) for electrical connection, which are offset from wafer layer to wafer layer.

17. Rate-of-rotation sensor according to one of the preceding claims, characterized in that the frames (6a to 6d) are provided on two opposite sides with mounting attachments (60, 61) arranged one above another in alignment.

18. Rate-of-rotation sensor according to Claim 7, characterized in that if the support structure is held on one side, apart from a spring strut (70, 70') assigned in each case to each oscillator, the said support structure is also provided with further holding and connecting struts (71 to 74) arranged in an offset manner, for the purpose of connecting to the respective frame (6a to 6d).

19. Rate-of-rotation sensor according to Claim 10, characterized in that the spring struts are formed, by means of anisotropic etching in [111] planes of the respective wafer layer, as leaf spring struts arranged at an angle to the possible deflection directions.

20. Rate-of-rotation sensor according to Claim 19, characterized in that each wafer layer is provided with two leaf spring struts of equal angular position opposed to an imaginary centre line in such a way that the result is a strut arrangement that mutually aligns and crosses itself from layer to layer and, as a whole, forms a crossed-spring articulation.

## Revendications

1. Capteur micromécanique de vitesse de rotation fondé sur le principe de Coriolis, comportant deux oscillateurs (1, 2) en forme de plaque à mettre en oscillation en contre-phase de manière électrostatique, caractérisé en ce que les deux oscillateurs (1, 2) sont superposés à la manière de couches dans deux plans et peuvent être mis en oscillation perpendiculairement au plan de leurs plaques.

2. Capteur de vitesse de rotation selon la revendication 1, caractérisé en ce que les oscillateurs (1, 2) sont reliés sur chacun de deux côtés opposés à une partie (3a, 3b respectivement 4a, 4b ; 32a, 32b respectivement 33c, 33d) d'une structure portante du type plaques superposées, par laquelle s'effectue la mise en oscillation électrostatique.

3. Capteur de vitesse de rotation selon la revendication 1, caractérisé en ce que les oscillateurs (1, 2) sont reliés sur un côté à une partie (4a, 4b, 33c, 33d) d'une structure portante du type plaques superposées, par laquelle s'effectue la mise en oscillation électrostatique.

4. Capteur de vitesse de rotation selon la revendication 2 ou 3, caractérisé en ce que la fréquence de résonance de la structure portante est choisie différente, de préférence supérieure à celle des oscillateurs (1, 2) et en ce que les parties de la structure portante de chaque oscillateur sont telles que leurs forces de réaction s'annulent réciproquement.

5. Capteur de vitesse de rotation selon la revendication 2 ou 3, caractérisé en ce que l'épaisseur des oscillateurs, qui s'étendent depuis la structure portante, est inférieure à celle de la structure portante, de manière que l'amplitude d'oscillation possible des oscillateurs (1, 2) soit sensiblement supérieure à l'amplitude d'excitation possible à travers la fente (30) du condensateur d'entraînement pour la mise en oscillation électrostatique, dans la zone de la structure portante.

6. Capteur de vitesse de rotation selon l'une des revendications précédentes, caractérisé en ce que les oscillateurs sont reliés d'une seule pièce à la structure portante, chacun par au moins une barrette d'articulation à ressort oscillant (9a, 9b, respectivement 9c, 9d respectivement 19c, 19d ; 90a à 90d) d'épaisseur réduite.

7. Capteur de vitesse de rotation selon la revendication 6, caractérisé en ce que la structure portante est maintenue sur un côté ou sur deux côtés, c'est-à-dire chaque fois sur le côté extérieur opposé à l'oscillateur, par l'intermédiaire d'une barrette élastique (70, 70' ; 5, 7 respectivement 5', 7') dans un cadre (6, 6') qui entoure l'ensemble constitué de l'oscillateur et de la structure portante.

8. Capteur de vitesse de rotation selon la revendication 7, caractérisé en ce que les différentes barrettes élastiques (70, 70' ; 5, 7 respectivement 5', 7') sont conçues en tant qu'éléments à ressort à lame qui garantissent des mouvements de déviation rotatifs des oscillateurs (1, 2) et suppriment en grande partie des mouvements linéaires des oscillateurs (1,2), perpendiculairement aux plans des plaques.

9. Capteur de vitesse de rotation selon l'une des revendications précédentes, caractérisé en ce que les oscillateurs (1, 2) avec les parties reliées d'une seule pièce à ceux-ci de la structure portante, des barrettes élastiques et du cadre, sont formés à partir de deux couches de tranches, par gravure anisotrope, qui sont oxydées pour l'isolation sur les surfaces reliées entre elles, et qui sont reliées entre elles par des liaisons de tranches pour donner une double structure d'oscillateur.

10. Capteur de vitesse de rotation selon la revendication 9, caractérisé en ce que les tranches sont des tranches de Si-[100].

11. Capteur de vitesse de rotation selon la revendication 9, caractérisé en ce que les doubles structures d'oscillateurs superposées et alignées sont disposées, de manière hermétiquement étanche, sur leur face inférieure et leur face supérieure par des plaques de couverture (26, 27) qui sont assemblées aux cadres (6, 6') à l'intérieur du boîtier ainsi formé, mis sous vide ou rempli d'un gaz inerte sous légère pression.

12. Capteur de vitesse de rotation selon la revendication 11, caractérisé en ce que les plaques de couverture (26, 27) sont en verre et sont assemblées, de manière hermétiquement étanche, par liaison anodique le long des cadres (6, 6').

13. Capteur de vitesse de rotation selon la revendication 11 ou 12, caractérisé en ce que les plaques de couverture (26, 27) sont revêtues sur leur côté intérieur de ressorts métalliques (8 à 13) plats, qui sont associés d'une part aux deux oscillateurs (1, 2), en tant que surfaces de condensateur de sélection ou de remise à zéro des oscillations, et d'autre part aux parties espacées de la structure portante, en tant qu'électrodes d'excitation ou pour la sélection de déplacements induits par des vitesses de rotation.

14. Capteur de vitesse de rotation selon la revendication 13, caractérisé en ce que les ressorts métalliques (8 à 13) peuvent être mis en contact électrique par des trous à contact traversant, des plaques de couverture (26, 27), lesquels trous sont fermés sur leur côté extérieur par des îlots de fermeture (20 à 31) conducteurs, rapportés par liaison.

15. Capteur de vitesse de rotation selon la revendication 14, caractérisé en ce que les îlots de fermeture conducteurs sont constitués par une matière de Si fortement dopée et sont reliés de manière hermétiquement étanche aux plaques de couverture par liaison anodique ou par des liaisons par fusion de Si.

16. Capteur de vitesse de rotation selon l'une des revendications précédentes, caractérisé en ce que les cadres (6a à 6d) sont pourvus, au moins sur un côté extérieur de l'agencement des couches, d'appendices (40 à 43), décalés d'une couche de tranche à l'autre, pour une connexion électrique.

17. Capteur de vitesse de rotation selon l'une des revendications précédentes, caractérisé en ce que les cadres (6a à 6d) sont pourvus sur deux côtés opposés, d'appendices de montage (60, 61) superposés et alignés.

18. Capteur de vitesse de rotation selon la revendication 17, caractérisé en ce que la structure portante, dans le cas d'une fixation d'un côté, est pourvue, outre d'une barrette élastique (70, 70') affectée à chaque oscillateur, d'autres barrettes de maintien et de connexion (71 à 74) décalées, pour la liaison avec le cadre (6a à 6d) correspondant.

19. Capteur de vitesse de rotation selon la revendication 18, caractérisé en ce que les barrettes élastiques sont constituées par des barrettes de ressorts à lames, disposées de manière à former un angle par rapport aux directions possibles de déviation, par gravure anisotrope dans des plans [111] de la couche de tranche correspondante.

20. Capteur de vitesse de rotation selon la revendication 19, caractérisé en ce que chaque couche de tranche est pourvue de deux barrettes de ressort à lame, avec même position angulaire de sens opposé par rapport à une ligne médiane imaginaire, de manière que d'une couche à l'autre il résulte une disposition alignée et en croix des barrettes qui forment dans l'ensemble une articulation élastique à croisillon.
